# EUROPÄISCHE PATENTANMELDUNG

(11) **EP 2 719 494 A1**
(43) Veröffentlichungstag der Anmeldung: **16.04.2014**
(21) Anmeldenummer: 12188323.5
(22) Anmeldetag: 12.10.2012
(51) Int. Cl.: B23K 26/38, F01D 5/00

(54) **Adaptives Verfahren zum Öffnen von verschlossenen Durchlässen eines Bauteils**

(71) Anmelder: MTU Aero Engines AG, 80995 München (DE)
(72) Erfinder: Eisen, Markus Dr., 30163 Hannover (DE); Magunia, Eckhart, 26409 Wittmund (DE)

(57) **Zusammenfassung**

Offenbart ist ein Verfahren zum automatisierten Öffnen von verschlossenen Durchlässen eines Bauteils, wobei ein Normbohrbild entsprechend einer Verformung des Bauteils zum Normbauteil verzerrt wird und anschließend eine Bohranlage entsprechend dem verzerrten Normbohrbild angesteuert wird.

## Beschreibung

Die Erfindung betrifft ein Verfahren zum automatisierten Öffnen von verschlossenen Durchlässen eines Bauteils nach dem Oberbegriff des Patentanspruchs 1.

Im Triebwerksbau werden aus Wirtschaftlichkeitsgründen geflogene bzw. gebrauchte Triebwerkskomponenten wie Leitschaufeln und Laufschaufeln einer Reparatur bzw. einer Überholung unterzogen. Im Zuge der Reparatur werden die Bauteile auf Beschädigungen wie Risse oder abgeplatzte Beschichtungen untersucht und anschließend nach einer entsprechenden Beseitigung der Beschädigungen und dem Entfernen eines ursprünglichen Schichtsystems mit einem neuen Schichtsystem versehen. Da Turbinenbauteile und dabei insbesondere Bauteile der Hochdruckturbine starken Beanspruchungen unterliegen, verziehen sich diese Bauteile durch den Triebwerksbetrieb. Somit deckt sich ein ursprünglich im Raum liegendes Muster von Kühlluftbohrungen eines Neuteils nicht mit dem geflogenen Bauteil. Infolge werden sämtliche Kühlluftbohrungen im Rahmen der Reparatur mittels Lötens verschlossen. Nach dem Auftrag des Schichtsystems wird dann das komplette Bohrbild wieder eingebracht. Das Öffnen der verschlossenen Kühlluftbohrungen erfolgt gewöhnlicherweise per Laserbohren.

In der europäischen Patentanmeldung EP 1 510 283 A1 wird vorgeschlagen, zu Beginn des Reparaturverfahrens die jeweilige Ist-Position der Kühlluftbohrungen aufzunehmen und die Kühlluftbohrungen dann mit einem adaptiven Bearbeitungsprozess wieder freizulegen. In den amerikanischen Patenten US 6,723,951 B1 und US 6,380,512 B1 wird ebenfalls vorgeschlagen, jede Kühlluftbohrung zu Beginn des Reparaturverfahrens messtechnisch einzeln zu erfassen und nach erfolgter Beschichtung die aktuellen Positionsdaten an eine Laseranlage zum Öffnen der Kühlluftbohrungen zu übergeben. Die Bestimmung der Ist-Positionen der Kühlluftbohrungen ist jedoch sehr zeitaufwändig. Zudem kann jede Position fehlerhaft erfasst werden, sodass nicht sichergestellt ist, dass die an die Laseranlage übergebene Ist-Position der tatsächlichen Ist-Position der jeweiligen Kühlluftbohrung entspricht.

Aufgabe der Erfindung ist es, ein schnelles und verlässliches Verfahren zum automatisierten Öffnen von verschlossenen Durchlässen eines Bauteils zu schaffen.

Diese Aufgabe wird gelöst durch ein Verfahren mit den Merkmalen des Patentanspruchs 1.

Bei einem erfindungsgemäßen Verfahren zum automatisierten Öffnen von verschlossenen Durchlässen eines Bauteils wird zuerst das Bauteil gescannt. Dann wird eine Verformung des Bauteils zum Normbohrbild ermittelt. Anschließend wird das Normbohrbild entsprechend der Verformung des Bauteils verzerrt. Abschließend werden die verschlossenen Durchlässe aufgebohrt.

Dadurch, dass die Verformungen des Bauteils auf das Normbohrbild übertragen werden, entfällt eine zeitaufwändige messtechnische Einzelaufnahme der Durchlässe vor dem Öffnen, wodurch eine signifikante Zeitersparnis gegenüber dem vorgenannten Verfahren möglich ist. Das Normbohrbild gibt zum Einen die Relativpositionen der Durchlässe zueinander und zum Anderen die der Durchlässe auf dem Bauteil vor, so dass durch die Übertragung der Verzerrungen die Durchlässe des Normbohrbilds automatisch zueinander in ihrer jeweiligen Ist-Position angeordnet werden. Gleichzeitig erfolgt hierdurch eine Positionskontrolle der Durchlässe zueinander, da nicht realisierbare Verformungen als fehlerhaft erkannt werden. "Verschlossen" bedeutet dabei sowohl teilweise als auch vollständig zugesteuert, beispielsweise beschichtet. Insbesondere bedeutet "verschlossen" eine teilweise Verringerung eines Ist-Querschnitts bis zu einer vollständigen Schließung eines Ist-Querschnitts des jeweiligen Durchlasses gegenüber einem Soll-Querschnitt. Das Öffnen der verschlossenen Durchlässe erfolgt bevorzugterweise unter Verwendung einer Strahlenquelle wie ein Laser bzw. eine Laseranlage. Alternativ kann jedoch auch eine Wasserstrahlanlage oder andere abtragende Verfahren eingesetzt werden.

Bevorzugterweise wird anhand von den verschlossenen Durchlässen des gescannten Bauteils ein Bohrbild ermittelt und das verzerrte Normbohrbild im Bereich von nicht verstopften Durchlässen maskiert. Durch die Maskierung steuert die Bohranlage nur die verschlossenen Durchlässe an, wodurch zum Einen die Bearbeitungszeit und somit die Durchlaufzeit zum Überholen des Bauteils verringert wird. Zum Anderen wird das Bauteil durch das Behandeln der nur verschlossenen Durchlässe nicht unnötig thermisch belastet.

Bevorzugterweise werden nur die Durchlässe mit einem Zusatzwerkstoff verschlossen, die im Bereich von Beschädigungen des Bauteils angeordnet sind. Hierdurch müssen weniger Durchlässe geöffnet werden, was in einer kurzen Bearbeitungszeit resultiert. Zudem wird das Bauteil thermisch weniger belastet, da weniger Durchlässe zu schließen und zu öffnen sind. Ferner lässt sich in Abhängigkeit von dem Zusatzwerkstoff ein langfristiger Effekt hinsichtlich der Bauteilqualität generieren. Ist der Zusatzwerkstoff zum Beispiel ein Lotwerkstoff, dem ein Schmelzpunktsenker zugesetzt ist, so setzt dieser (der Schmelzpunktsenker) langfristig die Bauteilfestigkeit und die Resistenz des Bauteils gegen Korrosion herab. Dadurch, dass aber lediglich die Durchlässe im Bereich der Beschädigungen mit dem Zusatzwerkstoff verschlossen werden, wird die Menge des Schmelzpunktsenkers gegenüber einem Schließen sämtlicher Durchlässe merklich verringert.

Zur weiteren Schonung des Bauteils während seiner Überholung wird es bevorzugt, wenn die Durchlässe mittels eines gepulsten Laserstrahls geöffnet werden.

Zur Vereinfachung der Lasersteuerung sind bevorzugterweise die Pulslänge, die Pulsfrequenz und die Energiedichte der Pulse gleich. Die Anzahl der erforderlichen Pulse lässt sich mittels dieser Kennwerte gezielt steuern. Zur Materialschonung des Bauteils werden jedoch kleine Energiedichten und kurze Pulse bevorzugt.

Sonstige vorteilhafte Ausführungsbeispiele der Erfindung sind Gegenstand weiterer Unteransprüche.

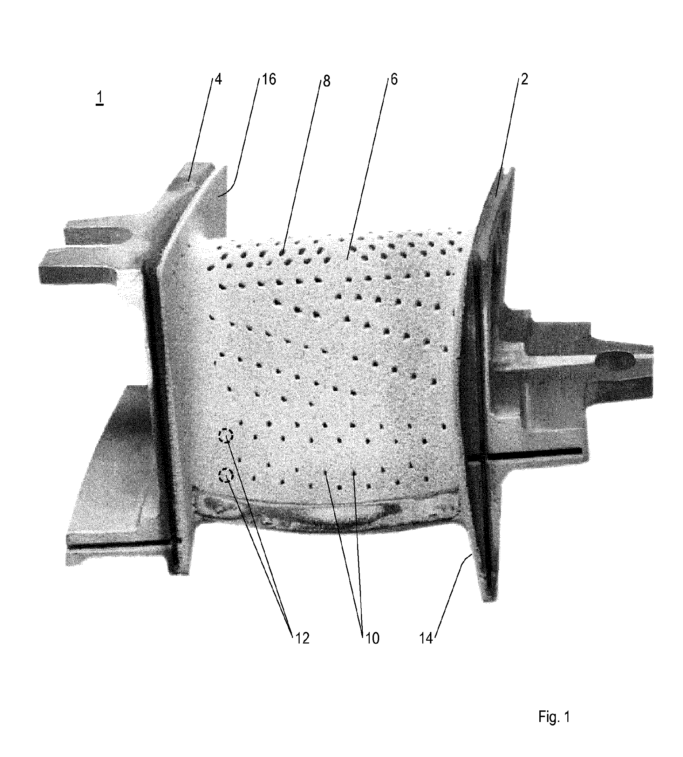

Im Folgenden wird ein bevorzugtes Ausführungsbeispiel der Erfindung anhand einer schematischen Darstellung näher erläutert. Die einzige Figur 1 zeigt eine perspektivische Darstellung einer gebrauchten Leitschaufel nach dem Beschichten und vor dem Öffnen ihrer verschlossenen Kühlluftbohrungen.

Figur 1 zeigt eine geflogene bzw. gebrauchte Leitschaufel 1 einer Strömungsmaschine wie ein Flugzeugtriebwerk im Zwischenstadium eines erfindungsgemäßen adaptiven Verfahrens zur Herstellung einer Leitschaufel und insbesondere zur Reparatur bzw. zum Überholen einer beschädigten Leitschaufel. Die in dem Zwischenstadium bereits teilweise überholte Leitschaufel 1 hat einen Innendeckband 2, ein Außendeckband 4 und ein sich zwischen den Deckbändern 2, 4 erstreckendes Schaufelblatt 6. Zumindest das Außendeckband 4 und das Schaufelblatt 6 sind mit einer Vielzahl von Kühlluftbohrungen 8, 10, 12 versehen, die in ihrer Gesamtheit ein Kühlluftschema zur Innenkühlung der Leitschaufel 1 ergeben. Aus Gründen der Übersichtlichkeit sind jedoch lediglich einige der Kühlluftbohrungen 8, 10, 12 mit einem Bezugszeichen versehen.

Das Bezugszeichen 8 repräsentiert freie Kühlluftbohrungen und somit Kühlluftbohrungen, deren Ist-Querschnitt einem Soll-Querschnitt entspricht und die somit nicht geöffnet werden müssen.

Die mit dem Bezugszeichen 10 versehenen Kühlluftbohrungen sind lediglich teilweise verschlossen bzw. querschnittreduziert und müssen zur Herstellung ihres Soll-Querschnitts geöffnet werden. Die teilweise verschlossenen Kühlluftbohrungen 10 sind ursprünglich vollständig geöffnete Kühlluftbohrungen, die beispielsweise beim Auftragen eines im Folgenden noch erläuterten Schichtsystems auf das Schaufelblatt 6 und die Deckbänder 2, 4 teilweise durch das Schichtsystem bzw. eine Schicht des Schichtsystems verschlossen werden.

Die mit dem Bezugszeichen 12 versehenen Kühlluftbohrungen sind vollständig verschlossen. Sie sind von außen nicht sichtbar. Ihre Ist-Position ist daher zeichnerisch durch gestrichelte Kreise angedeutet. Insbesondere sind sie mit einem in sie eingebrachten Zusatzwerkstoff verschlossen. Der Zusatzwerkstoff ist beispielsweise ein Lotwerkstoff, der durch eine Belotung in die Kühlluftbohrungen 12 eingebracht wird. Alternativ können die vollständig verschlossenen Kühlluftbohrungen 12 von einer Schicht des Schichtsystems vollständig überspannt sein.

Im Folgenden wird das erfindungsgemäße adaptive Verfahren näher erläutert: Das Verfahren unterteilt sich dabei vorrangig in die beiden Verfahrensbereiche "Beseitigen von Beschädigungen und Auftragen einer Beschichtung" und "Öffnen von Kühlluftbohrungen".

Zu Beginn des Verfahrens durchläuft die gebrauchte Leitschaufel 1 den ersten Verfahrensbereich "Beseitigen von Beschädigungen und Auftragen einer Beschichtung". Dabei werden zuerst Anbauteile von der Leitschaufel 1 entfernt. Dann wird die Leitschaufel 1 vollständig entschichtet. Anschließend werden Beschädigungen wie Risse in der Leitschaufel 1 durch Schweißen, Löten oder einem anderen Verfahren zum Aufbringen eines metallisierten Grundwerkstoffes beseitigt. Die Kühlluftbohrungen 12, die sich im Bereich der Beschädigung befinden, werden mit dem Zusatzwerkstoff vollständig erschlossen. Bevorzugterweise werden sie belotet. Die restlichen Kühlluftbohrungen 8, 10, außerhalb der Beschädigungen bleiben geöffnet. Nach dem Beseitigen der Beschädigungen und dem Beloten der ausgewählten Kühlluftbohrungen 12 wird ein Schichtsystem auf die Leitschaufel 1 und insbesondere auf die im Betrieb einem Heißgas ausgesetzten Bereiche der Leitschaufel 1 wie das Schaufelblatt 6 und Heißgasflächen 14, 16 der Deckbänder 2, 4 aufgetragen. Das Schichtsystem besteht aus einer unteren Korrosions- und Oxidationsschicht wie MCrAlY und einer oberen Wärmedämmschicht, beispielsweise eine Zirkonoxidschicht. Zudem wirkt die MCrAlY- Schicht als Haftschicht für die Wärmedämmschicht. Bevorzugterweise werden die Schichten mittels Thermischen Spritzens wie atmosphärischen Plasmaspritzen aufgetragen. Am Ende des ersten Verfahrensbereichs liegt die Leitschaufel 1 wie in Figur 1 gezeigt vor.

Nach dem Auftragen des Schichtsystems beginnt der zweite Verfahrensbereich "Öffnen von Kühlluftbohrungen". Nachdem das Schichtsystem aufgebracht wurde, wird die Leitschaufel 1 3D-gescannt und eine Verformung der Leitschaufel 1 zur Normleitschaufel erfasst. Hierzu wird beispielsweise die Leitschaufel 1 an ausgewählten Messpunkten erfasst und dann anhand von der Lage der Messpunkte zueinander die Verzerrung der Leitschaufel 1 ermittelt. Anhand der durch das Schichtsystem teilweise verschlossenen Kühlluftbohrungen 10 sowie der durch das Schichtsystem und/oder dem Zusatzwerkstoff vollständig verschlossenen Kühlluftbohrungen 12 wird ein bestehendes Bohrbild ermittelt. Dann wird ein Ursprungsbohrbild bzw. Normbohrbild entsprechend der Verformung der Leitschaufel 1 verzerrt. Nach dem Verzerren des Normbohrbildes mittels einer geeigneten Software wie eine CAD-Software und einer Maskierung entsprechend den nicht beloteten Kühlluftbohrungen 8 wird auf Basis des verzerrten und maskierten Normbohrbilds ein adaptives Bohrprogramm berechnet. Das Bohrprogramm wird zusammen mit der Leitschaufel 1 an eine Bohranlage übergeben. Die Bohranlage ist bevorzugterweise eine Laseranlage mit einem gepulsten Laser. Die Laseranlage wird nun so mittels des adaptiven Bohrprogramms angesteuert, dass lediglich die reduzierten und verschlossenen Kühlluftbohrungen 10, 12 mit einem gepulsten Laserstrahl angefahren werden. Dabei werden die reduzierten Kühlluftbohrungen 10 mit weniger Pulsen als die vollständig verschlossenen Kühlluftbohrungen 12 geöffnet. Zur Vereinfachung der Steuerung der Laseranlage weisen die Pulse bevorzugterweise eine einheitliche Länge, Frequenz und Energiedichte auf. Beispielsweise werden die mit einer Schicht verschlossenen Kühlluftbohrungen 10 mit 3 bis 5 Pulsen geöffnet, wohingegen die mit dem Zusatzwerkstoff versehenen Kühlluftbohrungen 12 mit mehr als 20 Pulsen geöffnet werden.

Nachdem die verschlossenen Kühlluftbohrungen 10, 12 vollständig geöffnet sind und somit wie die freien Kühlluftbohrungen 8 ihren Soll-Querschnitt aufweisen, ist das Herstellungs- bzw. Reparaturverfahren beendet. Die überholte Leitschaufel 1 kann nun wieder in eine Strömungsmaschine eingebaut werden.

Selbstverständlich ist das erfindungsgemäße adaptive Verfahren nicht auf die Überholung von Leitschaufeln beschränkt. Beispielhafte andere Bauteile einer Strömungsmaschine sind Laufschaufeln, Brennkammersegmente und dergleichen. Ebenso ist das erfindungsgemäße adaptive Verfahren nicht auf Strömungsmaschinen beschränkt, sondern kann überall dort eingesetzt werden, wo versehentlich oder bewusst verschlossene Durchlässe, Öffnungen, Bohrungen, Löchern, Ausnehmungen und dergleichen geöffnet werden müssen.

Offenbart ist ein Verfahren zum automatisierten Öffnen von verschlossenen Durchlässen eines Bauteils, wobei ein Normbohrbild entsprechend einer Verformung des Bauteils zum Normbauteil verzerrt wird und anschließend eine Bohranlage entsprechend dem verzerrten Normbohrbild angesteuert wird.

### Bezugszeichenliste

- 1: Leitschaufel
- 2: Innendeckband
- 4: Außendeckband
- 6: Schaufelblatt
- 8: Kühlluftbohrung unverschlossen
- 10: Kühlluftbohrung teilweise verschlossen
- 12: Kühlluftbohrung vollständig verschlossen
- 14: Heißgasfläche
- 16: Heißgasfläche

## Patentansprüche

1. Verfahren zum automatisierten Öffnen von verschlossenen Durchlässen (10, 12) eines Bauteils (1), mit den Schritten:
- Scannen des Bauteils (1),
- Ermitteln einer Verformung des Bauteils (1) zum Normbauteil,
- Verzerren eines Normbohrbildes entsprechend der Verformung des Bauteils (1) und
- Aufbohren der verschlossenen Durchlässe (10, 12).

2. Verfahren nach Anspruch 1, wobei anhand von den verschlossenen Durchlässen (10, 12) des gescannten Bauteils (1) ein Bohrbild ermittelt wird und das verzerrte Normbohrbild im Bereich von nicht verstopften Durchlässen (8) maskiert wird.

3. Verfahren nach Anspruch 1 oder 2, wobei nur die Durchlässe (12) mit einem Zusatzwerkstoff verschlossen werden, die im Bereich von Beschädigungen des Bauteils (1) angeordnet sind.

4. Verfahren nach Anspruch 3, wobei die Durchlässe (10, 12) mittels eines gepulsten Laserstrahls geöffnet werden.

5. Verfahren nach Anspruch 4, wobei die Pulse eine einheitliche Länge, Frequenz und Energiedichte aufweisen.
